Europäisches Patentamt

European Patent Office

Office européen des brevets

(11) Veröffentlichungsnummer: **0 413 909 B1**

(12) **EUROPÄISCHE PATENTSCHRIFT**

(45) Veröffentlichungstag der Patentschrift: **02.02.94**

(51) Int. Cl.5: **B27K 3/50**

(21) Anmeldenummer: **90110590.8**

(22) Anmeldetag: **05.06.90**

Die Akte enthält technische Angaben, die nach dem Eingang der Anmeldung eingereicht wurden und die nicht in dieser Patentschrift enthalten sind.

(54) **Mittel oder Konzentrat zum Konservieren von Holz oder Holzwerkstoffen.**

(30) Priorität: **23.08.89 DE 3927806**

(43) Veröffentlichungstag der Anmeldung:
**27.02.91 Patentblatt 91/09**

(45) Bekanntmachung des Hinweises auf die Patenterteilung:
**02.02.94 Patentblatt 94/05**

(84) Benannte Vertragsstaaten:
**AT BE CH DE DK ES FR GB GR IT LI LU NL SE**

(56) Entgegenhaltungen:
**EP-A- 0 148 526**
**EP-A- 0 269 817**
**EP-A- 0 370 665**
**DE-A- 2 551 560**
**FR-A- 2 383 764**

(73) Patentinhaber: **DESOWAG Materialschutz GmbH**
**Postfach 32 02 20,**
**Rossstrasse 76**
**D-40417 Düsseldorf(DE)**

(72) Erfinder: **Metzner, Wolfgang, Dr.**
**Windmühlenstrasse 53**
**D-4150 Krefeld(DE)**
Erfinder: **Naczinski, Luzian**
**Nierster Strasse 18**
**D-4005 Meerkamp-Lank(DE)**
Erfinder: **Wegen, Hans-Werner, Dr.**
**Niessenstrasse 25**
**D-4150 Krefeld(DE)**

(74) Vertreter: **Lauer, Dieter, Dr.**
**c/o Solvay Deutschland GmbH**
**Hans-Böckler-Allee 20**
**D-30173 Hannover (DE)**

## Beschreibung

Die vorliegende Erfindung betrifft ein Mittel oder Konzentrat zum Konservieren von Holz und Holzwerkstoffen auf der Basis von oder unter Mitverwendung von 1-[[2-(2,4-Dichlorphenyl)-4-propyl-1,3-dioxolan-2-yl] methyl]-1H-1,2,4-triazol und mindestens eines Lösungsmittels, Verdünnungsmittels und/oder Zusatzmittels.

Die chemische Verbindung 1-[[2-(2,4-Dichlorphenyl)-4-propyl-1,3-dioxolan-2-yl]methyl]-1H-1,2,4-triazol (common name: Propiconazol) ist aus der DE-PS 25 51 560 bekannt und findet als fungizid wirkendes Mittel zur Bekämpfung bestimmter Pilze und Bakterien in der Landwirtschaft Vervendung. Die in dieser Literaturstelle genannten Pilze sind jedoch weder holzverfärbend noch holzzerstörend.

An ein Holzkonservierungsmittel werden jedoch Anforderungen gestellt, die über die rein fungizide Wirksamkeit desselben hinausgehen.

Aus EP-A-0269 817 ist ein Mittel zum Konservieren von Holz und Holzwerkstoffen bekannt, das eine Kombination von Azaconazol und Pyrethroiden enthält. Zahlenmäßige Angaben über die insektizide und fungizide Wirksamkeit dieses Mittels werden jedoch nicht gemacht.

Aus EP-A-0148 526 ist eine wasserverdünnbare holzschützende Flüssigkeit bekannt, die als Wirkstoff ein Azol bestimmter chemischer Struktur, u.a. Azaconazol oder Propiconazol, enthält. Bevorzugt wird jedoch Azaconazol verwendet. Die Azole können mit zahlreichen Insektiziden kombiniert werden, u.a. mit Pyrethroiden, ohne daß jedoch für diese Kombinationen Beispiele gebracht werden.

Ziel und Aufgabe der vorliegenden Erfindung war es daher, ein Holzkonservierungsmittel zu finden, das gegenüber holzverfärbenden und holzzerstörenden Pilzen sowie gegenüber holzschädigenden Insekten, insbesondere gegenüber holzzerstörenden Bockkäfern (Cerambycidae, Lyctidae, Bostrychidae und Anobiidae) einschließlich Termiten hochwirksam ist und eine gute Langzeitwirkung aufweist, wobei die Wirksamkeit des Fungizides durch das Insektizid nicht beeinträchtigt wird bzw. umgekehrt. Darüber hinaus sollte das Holzkonservierungsmittel ein gutes Eindringvermögen im Holz und in den Holzwerkstoffen aufweisen.

Erfindungsgemäß wurde festgestellt, daß diesen Zielen und Aufgaben ein Mittel oder Konzentrat zum Konservieren von Holz und Holzwerkstoffen gerecht wird, das 0,05 bis 25 Gew.-% des 1-[[2-(2,4-Dichlorphenyl)-4-propyl-1,3-dioxolan-2-yl]methyl]-1H-1,2,4-triazols, 0,002 bis 5 Gew.-% Cyano-(4-fluoro-3-phenoxyphenyl)-methyl-3-(2,2-dichlorethenyl)-2,2-dimethylcyclopropancarboxylat, $(\pm)\alpha$ -Cyano-3-phenoxy-benzyl-($\pm$)-cis, trans-3-(2,2-dichlorvinyl)-2,2-dimethylcyclopropancarboxylat, (S)-$\alpha$ -Cyano-3-phenoxybenzyl(1R,3R)-3(2,2-dibromvinyl)-2,2-dimethylcyclopropancarboxylat oder 3-Phenoxybenzyl-($\pm$)-cis-trans-3-(2,2-dichlorvinyl)2,2-dimethylcyclopropancarboxylat oder enatiomere Verbindungen derselben als Insektizid (Pyrethroid) und mehr als 40 Gew.-% eines Gemisches aus Lösungs- und/oder Verdünnungsmittel und/oder organisch-chemisches Bindemittel oder Fixierungsmittel, Verarbeitungshilfsmittel, Farbstoff, Pigment, Farbstoff- oder Pigmentgemisch enthält.

Das Lösungs- und/oder Verdünnungsmittel enthält ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und mindestens einen Emulgator und/oder Netzmittel oder besteht daraus.

Als organisch-chemische Lösungsmittel werden vorzugsweise ölige oder ölartige Lösungsmittel mit einer Verdunstungszahl über 35 und einem Flammpunkt oberhalb 30°C, vorzugsweise oberhalb 45 °C, eingesezt. Als derartige schwerflüchtige, wasserunlösliche, ölige oder ölartige Lösungsmittel werden entsprechende Mineralöle oder deren Aromatenfraktionen oder mineralölhaltige Lösungsmittelgemische, vorzugsweise Testbenzin, Petroleum und/oder Alkylbenzol verwendet.

Vorteilhaft gelangen Mineralöle mit einem Siedebereich von 170 - 220 °C, Testbenzin mit einem Siedebereich von 170 - 220 °C, Spindelöl mit einem Siedebereich von 250 °C - 350 °C, Petroleum bzw. Aromaten vom Siedebereich 160 - 280 °C, Terpentinöl und dgl. zum Einsatz.

In einer Ausführungsform wurden flüssige aliphatische Kohlenwasserstoffe mit einem Siedebereich von 180 - 210 °C oder hochsiedende Gemische von aromatischen und aliphatischen Kohlenwasserstoffen mit einem Siedebereich von 180 bis ca. 220 °C und/oder Spindelöl und/oder Monochlornaphthalin, vorzugsweise $\alpha$-Monochlornaphthalin, verwendet.

Die organischen schwerflüchtigen öligen oder ölartigen Lösungsmittel mit einer Verdunstungszahl über 35 und einem Flammpunkt oberhalb 30 °C, vorzugsweise oberhalb 45 °C, können teilweise durch leicht oder mittelflüchtige organisch-chemische Lösungsmittel ersetzt werden, mit der Maßgabe, daß das Lösungsmittelgemisch ebenfalls eine Verdunstungszahl über 35 und einen Flammpunkt oberhalb 30 °C, vorzugsweise oberhalb 45 °C, aufweist und daß das Insektizid-Fungizid-Gemisch in diesem Lösungsmittelgemisch löslich oder emulgierbar ist.

Nach einer bevorzugten Ausführungsform wird ein Teil des organisch-chemischen Lösungsmittels oder Lösungsmittelgemisches durch ein aliphatisches polares organisch-chemisches Lösungsmittel oder Lösungsmittelgemisch ersetzt. Vorzugsweise gelangen Hydroxyl- und/oder Ester- und/oder Ethergruppen enthaltende aliphatische organisch-chemische Lösungsmittel wie beispielsweise Glycoläther, Ester oder dgl. zur Anwendung.

Als organisch-chemische Bindemittel werden im Rahmen der vorliegenden Erfindung die an sich bekannten wasserverdünnbaren und/oder in den eingesetzten organisch-chemischen Lösungsmitteln löslichen oder dispergier- bzw. emulgierbaren Kunstharze und/oder bindende trocknende Öle, insbesondere Bindemittel bestehend aus oder enthaltend ein Acrylatharz, ein Vinylharz, z. B. Polyvinylacetat, Polyesterharz, Polykondensations- oder Polyadditionsharz, Polyurethanharz, Alkydharz bzw. modifiziertes Alkydharz, Phenolharz, Kohlenwasserstoffharz wie Inden-Cumaronharz, Siliconharz, trocknende pflanzliche und/oder trocknende Öle und/oder physikalisch trocknende Bindemittel auf der Basis eines Natur- und/oder Kunstharzes verwendet.

Das als Bindemittel verwendete Kunstharz kann in Form einer Emulsion, Dispersion oder Lösung, eingesetzt werden. Als Bindemittel können auch Bitumen oder bituminöse Substanzen bis zu 10 Gew.-%, verwendet werden. Zusätzlich können an sich bekannte Farbstoffe, Pigmente, wasserabweisende Mittel, Geruchskorrigentien und Inhibitoren bzw. Korrosionsschutzmittel und dgl. eingesetzt werden.

Bevorzugt ist gemäß der Erfindung als organisch-chemisches Bindemittel mindestens ein Alkydharz bzw. modifiziertes Alkydharz und/oder ein trocknendes pflanzliches Öl im Mittel oder im Konzentrat enthalten. Bevorzugt werden gemäß der Erfindung Alkydharze mit einem Ölgehalt von mehr als 45 Gew.-%, vorzugsweise 50 bis 68 Gew.-%, verwendet.

Das organisch-chemische Bindemittel oder Bindemittelgemisch kann ganz, vorzugsweise teilweise durch mindestens ein Fixierungsmittel oder mindestens einen Weichmacher ersetzt werden.

Dabei ist das organisch-chemische Bindemittel oder Bindemittelgemisch von 0 bis zu 75 Gew.-%, vorzugsweise von 0,01 bis zu 35 Gew.-% (bezogen auf 100 Gew.-% eingesetztes Bindemittel, berechnet als Feststoff) durch die gleichen Gewichtsmengen mindestens eines Fixierungsmittels oder mindestens eines Weichmachers ersetzt.

Als Fixierungsmittel oder Weichmacher werden vor allem solche Verbindungen eingesetzt, die neben einer gewissen Bindung oder Haftung an den Wirkstoff zusätzlich eine Verflüchtigung der Wirkstoffe und/oder eine - Kristallisation bzw. Ausfällung verhindern sollen, vorzugsweise

a) Weichmacher, z. B. Alkyl-, Aryl- oder Aralkylphthalate, vorzugsweise Dibutyl-, Dioctyl- und Benzylbutylphthalate, Alkylphosphate bzw. Phosphorsäureester, vorzugsweise Tributylphosphat, Adipate, vorzugsweise Di-(2-äthylhexyl)-adipat, Stearate und Oleate, z. B. Alkylstearate oder Alkyloleate, vorzugsweise Butyloleat, Butylstearat oder Amylstearat, Bis-(dimethylbenzyl)-äther, p-Toluolsulfonsäureäthylester, Glycerinester, Glycerinäther oder höhermolekulare Glykoläther und/oder

b) Fixierungsmittel auf der Basis von Ketonen und/oder Polyvinylalkyläthern, z. B. Ketone mit Alkyl-, Aryl- oder Aralkylgruppen, vorzugsweise Benzophenon, Äthylbenzophenon; Polyvinyläther, vorzugsweise Polyvinylmethyläther.

Nach einer bevorzugten Ausführungsform enthält das Mittel (anwendungsfertige Mittel) 0,2 bis 3 Gew.-%, vorzugsweise 0,5 bis 2 Gew.-% des 1-[[2-(2,4-Dichlorphenyl)-4-propyl-1,3-dioxolan-2-yl]methyl]-1H-1,2,4-triazols, 0,005 bis 1 Gew.-%, vorzugsweise 0,01 bis 0,5 Gew.-% des Pyrethroids und mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und einen Emulgator und/oder Netzmittel und ggf. 0 bis 5 Gew.-%, vorzugsweise 0,1 bis 3 Gew.-% Fixierungsmittel und/oder andere Zusatzmittel als Restbestandteil.

Nach einer anderen bevorzugten Ausführungsform enthält das Mittel (anwendungsfertige Mittel) 0,2 bis 3 Gew.-%, vorzugsweise 0,5 bis 2 Gew.-% des 1-[[2-(2,4-Dichlorphenyl)-4-propyl-1,3-dioxolan-2-yl]methyl] -1H-1,2,4-triazol, 0,005 bis 1 Gew.-%, vorzugsweise 0,01 bis 0,5 Gew.-% des Pyrethroids, 2 bis 30 Gew.-%, vorzugsweise 5 bis 22 Gew.-% berechnet als Feststoff, eines Kunstharzbindemittels, vorzugsweise ein Alkydharz und/oder ein trocknendes pflanzliches Öl sowie mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und einen Emulgator und/oder Netzmittel sowie ggf. Sikkative, Farbstoffe, Farbpigmente und/oder UV-Stabilisatoren als Restbestandteil.

Das erfindungsgemäße Konzentrat zum Konservieren von Holz und Holzwerkstoffen enthält nach einer vorzugsweisen Ausführungsform 0,2 bis 25 Gew.-%, vorzugsweise 3 bis 8 Gew.-%, des 1-[[2-(2,4-Dichlorphenyl)-4-propyl-1,3-dioxolan-2-yl]methyl]-1H-1,2,4-triazols, 0,05 bis 5 Gew.-%, vorzugsweise 0,5 bis 1 Gew.-% des Pyrethroids und 5 bis 40 Gew.-%, vorzugsweise 10 bis 30 Gew.-%, (berechnet als Feststoff) mindestens eines organisch-chemischen Bindemittels und/oder Fixierungsmittels oder Weichmachers sowie zusätzlich ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder ein Penetrationshilfsmittel und/oder Wasser und einen Emulgator und/oder Netzmittel als Restbestandteil.

Das Mittel oder Konzentrat enthält nach einer Ausführungsform als Emulgator oder Emulgatorgemisch mindestens ein eine Seitengruppe enthaltendes äthoxyliertes Phenol, vorzugsweise ein äthoxyliertes Nonylphenol und/oder eine äthoxylierte Fettsäure.

Das Konzentrat und das daraus hergestellte Mittel zum Konservieren von Holz und Holzwerkstoffen enthält nach einer anderen Ausführungsform ein Gemisch von Emulgatoren mit unterschiedlicher Kettenlänge, von denen mindestens ein Emulgator eine äthoxylierte Seitenkette von weniger als 10 Äthoxygruppen und von denen mindestens ein anderer Emulgator eine äthoxylierte Seitenkette von mehr als 10 Äthoxygruppen besitzt.

Vorteilhaft enthält das Konzentrat und das Mittel als wasserverdünnbares Kunstharz ein Alkydharz, das eine mittlere Öllänge besitzt. Durch die Verwendung dieses Kunstharzes wird trotz des geringen Anteiles des organisch-chemischen Lösungsmittels, z. B. auf Erdölbasis, erreicht, daß einerseits eine bessere Fixierung der Wirkstoffe erzielt und andererseits je nach Kunstharzanteil eine Filmbildung ermöglicht wird.

Nach einer vorteilhaften Ausführungsform ist im erfindungsgemäßen Mittel oder Konzentrat das eingesetzte 1-[[2-(2,4-Dichlorphenyl)-4-propyl-1,3-dioxolan-2-yl] methyl]-1H-1,2,4-triazol von 0 bis 50 Gew.-%, vorzugsweise von 0,5 bis 25 Gew.-% (bezogen auf 100 - Gew.-% eingesetztes 1-[[2-(2,4-Dichlorphenyl)-4-propyl-1,3-dioxolan-2-yl]methyl]-1H-1,2,4-triazol durch die gleiche Gewichtsmenge eines anderen Fungizids, vorzugsweise N-Dichlorfluormethylthio-N',N'-dimethyl-N-phenylschwefelsäurediamid (Dichlofluanid) und/oder N-(Dichlorfluormethylthio)N',N'-dimethyl-N-p-tolylsulfamid (Methyleuparen) und/oder 1-[[2-(2,4-Dichlorphenyl)-1,3-dioxolan-2-yl]methyl]-1-H-1,2,4-triazol (Azaconazol) und/oder 1-(4-Chlor-)-phenyl-3-hydroxy-3-tert.butyl-4-(1,2,4-triazol-1-yl)-butan und/oder Tributylzinn-naphthenat und/oder Methylbenzimidazol-2-yl-Carbamat (Carbendazim) ersetzt. Letzere Verbindung wird insbesondere in wäßrigen Formulierungen eingesetzt.

Im erfindungsgemäßen Mittel oder Konzentrat kann das Cyano-(4-fluoro-3-phenoxyphenyl)-methyl-3-(2,2-dichlorethenyl)-2,2-dimethylcyclopropancarboxylat, (±)α -Cyano-3-phenoxy-benzyl-(±)-cis, trans-3-(2,2-dichlorvinyl)-2,2-dimethylcyclopropancarboxylat, (S)α-Cyano-3-phenoxybenzyl(1R,3R)-3(2,2-dibromvinyl)-2,2-dimethylcyclopropancarboxylat oder 3-Phenoxybenzyl-(±)-cis-trans-3-(2,2-dichlorvinyl)2,2-dimethylcyclopropancarboxylat oder enantiomere Verbindungen - derselben je nach Einsatzzweck vorteilhaft teilweise durch ein anderes Pyrethroid, ein insektizides Carbamat oder einen insektiziden Phosphorsäureester, Thiophosphorsäureester, Dithiophosphorsäureester oder Thionophosphorsäureester ersetzt werden.

Nach einer vorzugsweisen Ausführungsform ist das erfindungsgemäße Mittel oder Konzentrat frei von aromatischen Oxylalkoholen.

Das erfindungsgemäße Mittel oder Konzentrat zum Konservieren von Holz und Holzwerkstoffen gelangt gegenüber folgende holzzerstörende Insekten, holzzerstörende sowie holzverfärbende Pilze zum Einsatz:

A. Holzzerstörtende Insekten wie

A.1. Käfer:
Hylotrupes bajulus, Chlorophorus pilosus, Anobi um punctatum, Xestobium rufovillosum, Ptilinus pecticornis, Dendrobium pertinex, Ernobius mollis, Priobium carpini,
Lyctus brunneus, Lyctus africanus, Lyctus planicollis, Lyctus linearis, Lyctus pubescens, Trogoxylon aeguale, Minthea rugicollis,
Xyleborus spec., Tryptodendron spec.,
Apate monachus, Bostrychus capucins, Heterobostrychus brunneus, Sinoxylon spec, Dinoderus minutus.
A.2. Hautflügler
Sirex juvencus, Urocerus gigas, Urocerus gigas taignus, Urocerus augur.
A.3. Termiten
Kalotermes flavicollis, Cryptotermes brevis,
Heterotermes indicola, Reticulitermes flavipes,Reticulitermes santonensis, Reticulitermes lucifugus,
Mastotermes darwiniensis, Zootermopsis nevadensis, Coptotermes formosanus.

B. Holzzerstörende Pilze wie

B.1. Basidiomyceten
Coniophora puteana, Coriolus versicolor, Poria placenta, Poria monticola, Poria vaporaria, Poria vaillantii, Gloeophyllum sepiarium, Gloeophyllum adoratum, Gloeophyllum abietinum, Gloeophyllum trabeum, Gloeophyllum protactum, Lentinus lepideus, Lentinus edodes, Lentinus cyathiformes, Lentinus squarrolosus, Paxillus panuoides, Tyromyces palustris, Pleurotus ostreatus, Donkioporia expansa, Serpula lacrymans, Serpula himantoides,Glenospora graphii.
B.2. Deuteromyceten
Cladosporium herbarum.
B.3. Ascomyceten
Chaetomium globosum, Chaetomium alba-arenulum, Petriella setifera, Trichurus spiralis, Humicola grisea.

C. Holzverfärbende Pilze wie

C.1. Deuteromyceten
Aureobasidium pullulans, Sclerophoma pithyophila, Scopularia phycomyces, Aspergillus niger, Penicillium variabile, Trichoderma viride, Trichoderma lignorum, Dactyleum fusarioides.
C.2. Ascomyceten
Caratocystis minor.
C.3. Zygomyceten
Mucor spinosus.

D. Versuchsergebnisse

D.1. Insektizide Prüfung
Prüfung der vorbeugenden Wirkung gegenüber Eilarven des Hausbockkäfers (Hylotrupes bajulus) unter teilweiser Hinzuziehung der DIN EN 46.
Erfindungsgemäßes Holzkonservierungsmittel:

| | |
|---|---|
| 1-[[2-(2,4-Dichlorphenyl)-4-propyl-1,3-dioxolan-2-yl] methyl]-1H-1,2,4-triazol (Propiconazol) | 1,5 Gew.-% |
| Cyano-(-4-fluoro-3-phenoxyphenyl-methyl-3-(2,2-dichloro-ethenyl)-2,2-dimethylcyclopropancarboxylat (Cyfluthrin) | 0,01 Gew.-% |
| N-Dichlorfluormethylthio-N',N'-dimethyl-N-phenylschwefelsäure-diamid (Dichlofluanid) | 0,55 Gew.-% |
| Alkydharz (100 %ig) | 18,0 Gew.-% |
| Sikkative, Netzmittel Antiabsetzmittel | 1,0 Gew.-% |
| Butyldiglykol | 4,0 Gew.-% |
| Lösungsmittel | 74,94 Gew.-% |
| (Gemisch aus aromatischen und aliphatischen Kohlenwasserstoffen) | |

| Aufgebrachte Menge an Holzkonservierungsmittel je m$^2$ Holzfläche | Versuchsdauer in Wochen | Anzahl und Zustand der Prüftiere | | | |
|---|---|---|---|---|---|
| | | tot | | lebend | |
| | | nicht eingenagt | eingenagt | eingenagt | nicht eingenagt |
| | | 10 | 0 | 0 | 0 |
| | | 10 | 0 | 0 | 0 |
| | | 10 | 0 | 0 | 0 |
| 160 g | 4 | 10 | 0 | 0 | 0 |
| | | 10 | 0 | 0 | 0 |
| | | 10 | 0 | 0 | 0 |
| | | 0 | 0 | 10 | 0 |
| | | 0 | 0 | 10 | 0 |
| unbehandelte | | 0 | 0 | 10 | 0 |
| Kontrollproben | 4 | 0 | 0 | 10 | 0 |
| | | 0 | 0 | 10 | 0 |
| | | 0 | 0 | 10 | 0 |

D.2. Fungizide Prüfung gegenüber holzzerstörende Pilze
Erfindungsgemäßes Holzkonservierungsmittel

6

| 1-[[2-(2,4-Dichlorphenyl)--4-propyl-1,3-dioxolan-2-yl] methyl] -1H-1,2,4-triazol (Propiconazol) | 1,5 Gew.-% |
|---|---|
| Cyano-(-4-fluoro-3-phenoxyhenyl-methyl-3-(2,2-dichloro-ethenyl)-2,2-dimethylcyclopropancarboxylat (Cyfluthrin) | 0,01 Gew.-% |
| Butyldiglykol | 4,5 Gew.-% |
| Lösungsmittel (Gemisch aus aromatischen und aliphatischen Kohlenwasserstoffen) | 93,99 Gew.-% |

Das erfindungsgemäße Mittel wird in einem Gemisch aus aromatischen und aliphatischen Kohlenwasserstoffen gelöst, in einem 2 %igen Malzagar zugesetzt, so daß Endkonzentrationen von 0,0006 bis 0,6 % erreicht werden.

Der Agar wird in Petrischalen gegossen. Nach dem Erstarren werden die schutzmittelhaltigen Agarplatten zentral mit einem ca. 0,5 cm2 großen Myzelstück der holzzerstörenden Basidiomyceten Poria placenta, Coniophora puteana, Coriolus versicolor und Gleophyllum trabeum beimpft.

Nach zwölftägiger Inkubation der Schalen bei 22-25 °C wird die Entwicklung des Pilzwachstums auf dem Nähragar im Vergleich mit der Kontrolle (wirkstofffreie Lösungsmittelkomponente) mittels planimetrischem Verfahren nach folgendem Schema beurteilt:

0 = kein Pilzwachstum (Pilzmyzel völlig inhibiert)
1 = sehr geringes Pilzwachstum (weniger als 1/3 der Oberfläche bewachsen)
2 = geringes Pilzwachstum (bis 1/2 der Oberfläche bewachsen)
3 = mittleres Pilzwachstum (bis 2/3 der Oberfläche bewachsen)
4 = starkes Pilzwachstum (mehr als 2/3 der Oberfläche bewachsen)
5 = ungehemmtes Pilzwachstum (Oberfläche völlig bewachsen)

Ergebnis:

| Prüfpilz | Schutzmittelkonzentration im Nähragar (%) | | | | |
|---|---|---|---|---|---|
| | 0 | 0,0006 | 0,006 | 0,06 | 0,6 |
| Poria placenta | 5(*) | 5 | 3 | 1 | 0 |
| Coniophora puteana | 5(*) | 3 | 2 | 1 | 0 |
| Coriolus versicolor | 5(*) | 5 | 4 | 1 | 1 |
| Gloeophyllum trabeum | 4(*) | 4 | 2 | 1 | 1 |

\* = Nähragar mit wirkstoffreier Lösemittelkomponente

Das Ergebnis zeigt, daß das erfindungsgemäße Holzkonservierungsmittel gegenüber holzzerstörenden Pilzen eine eindeutige Effektivität in Form deutlicher Wachstumsinhibierungen aufweist.

D.3. Fungizide Prüfung gegenüber holzverfärbende Pilze
Erfindungsgemäßes Holzkonservierungsmittel:

| 1-[[2-(2,4-Dichlorphenyl)-4-propyl-1,3-dioxolan-2-yl] methyl]-1H-1,2,4-triazol (Propiconazol) | 10,0 Gew.-% |
|---|---|
| Cyano-(-4-fluoro-3-phenoxyphenyl-methyl-3-(2,2-dichloro-ethenyl)-2,2-dimethylcyclopropancarboxylat (Cyfluthrin) | 0,5 Gew.-% |
| Alkydharz (100 %ig) | 20,0 Gew.-% |
| Emulgator | 8,0 Gew.-% |
| Wasser | 61,5 Gew.-% |

Das Holzkonversierungsmittel (Konzentrat) wurde in Verdünnungen von 1 : 20 bis 1 : 5 im Stammscheibentest gegenüber Aureobasidum pullulans geprüft.

Als Prüfkörper dienen Kiefernscheiben vom Durchmesser 90 - 120 mm. Die Scheiben werden in eine Nährlösung getaucht, sterilisiert und in das zu prüfende Schutzmittel getaucht.

Anschließend werden sie in Glaspetrischalen mit einer Sporensuspension beimpft und für 3 Wochen bei 22 - 26 °C und 65 - 75 % relativer Luftfeuchte inkubiert. Anschließend erfolgt die Bonitur. Ein ausreichender Schutz ist gewährleistet, wenn sich kein Bläuebewuchs zeigt.

Ergebnis:

Verdünnung     1 : 20 nicht ausreichend

                    1 : 10 ausreichend

                    1 : 5 ausreichend

Das Ergebnis zeigt, daß das erfindungsgemäße Holzkonservierungsmittel gegenüber holzverfärbenden Pilze wirksam ist.

Beispiele

1. Lasurartiges Holzkonservierungsmittel (farblos)

| | |
|---|---|
| 1-[[2-(2,4-Dichlorphenyl)-4-propyl-1,3-dioxolan-2-yl] methyl]-1H-1,2,4-triazol (Propiconazol) | 1,5 Gew.-% |
| Cyano-(-4-fluoro-3-phenoxyphenyl-methyl-3-(2,2-dichloro-ethenyl)-2,2-dimethylcyclopropancarboxylat (Cyfluthrin) | 0,01 Gew.-% |
| N-Dichlorfluormethylthio-N',N'-dimethyl-N-phenylschwefelsäure-diamid (Dichlofluanid) | 0,55 Gew.-% |
| Alkydharz (100%ig) | 18,0 Gew.-% |
| Sikkative, Netzmittel, Antiabsetzmittel | 1,0 Gew.-% |
| Butyldiglykol | 4,0 Gew.-% |
| Lösungsmittel | 74,94 Gew.-% |
| (Gemisch aus aromatischen und aliphatischen Kohlenwasserstoffen) | |

2. Lasurartiges Holzkonservierungsmittel (farbig)

| | |
|---|---|
| 1-[[2-(2,4-Dichlorphenyl)-4-propyl-1,3-dioxolan-2-yl] methyl]-1H-1,2,4-triazol (Propiconazol) | 1,5 Gew.-% |
| Cyano-(-4-fluoro-3-phenoxyphenyl-methyl-3-(2,2-dichloro-ethenyl)-2,2-dimethylcyclopropancarboxylat (Cyfluthrin) | 0,01 Gew.-% |
| Alkydharz (100%ig) | 25,0 Gew.-% |
| Pigment Sikkative, Netzmittel | 3,0 Gew.-% |
| Antiabsetzmittel | 1,0 Gew.-% |
| Butyldiglykol | 3,0 Gew.-% |
| Lösungsmittel | 66,49 Gew.-% |
| (Gemisch aus aromatischen und aliphatischen Kohlenwasserstoffen) | |

3. Holzkonservierungsmittel mit grundierender Wirkung

| | |
|---|---|
| 1-[[2-(2,4 -Dichlorphenyl)-4-propyl-1,3-dioxolan-2-yl] methyl]-1H-1,2,4-triazol (Propiconazol) | 1,5 Gew.-% |
| Cyano-(-4-fluoro-3-phenoxyphenyl-methyl-3-(2,2-dichloro-ethenyl)-2,2-dimethylcyclopropancarboxylat (Cyfluthrin) | 0,01 Gew.-% |
| Alkydharz 100%ig | 9,0 Gew.-% |
| Butyldiglykol | 3,0 Gew.-% |
| Sikkative | 0,2 Gew.-% |
| Lösungsmittel | 86,29 Gew.-% |
| (Gemisch aus aromatischen und alihatischen Kohlenwasserstoffen) | |

4. Holzkonservierungsmittel mit vorbeugender Wirkung für den Holzbau (farbig)

| 1-[[2-(2,4-Dichlorphenyl)-4-propyl-1,3-dioxolan-2-yl] methyl]-1H-1,2,4-triazol (Propiconazol) | 1,5 Gew.-% |
|---|---|
| Cyano-(-4-fluoro-3-phenoxyphenyl-methyl-3-(2,2-dichloro-ethenyl)-2,2-dimethylcyclopropancarboxylat (Cyfluthrin) | 0,01 Gew.-% |
| Butyldiglykol | 4,5 Gew.-% |
| Lösungsmittel | 93,99 Gew.-% |
| (Gemisch aus aromatischen und aliphatischen Kohlenwasserstoffen) | |

5. Holzkonservierungsmittel mit vorbeugender Wirkung für Holzbau (farbig)

| 1-[[2-(2,4-Dichlorphenyl)-4-propyl-1,3-dioxolan-2-yl] methyl]-1H-1,2,4-triazol (Propiconazol) | 1,5 Gew.-% |
|---|---|
| Cyano-(-4-fluoro-3-phenoxyphenyl-methyl-3-(2,2-dichloro-ethenyl)-2,2-dimethylcyclopropancarboxylat (Cyfluthrin) | 0,05 Gew.-% |
| Butyldiglykol | 3,0 Gew.-% |
| Farbstoff (Fettbraun B) | 0,5 Gew.-% |
| Lösungsmittel | 94,95 Gew.-% |
| (Gemisch aus aromatischen und aliphatischen Kohlenwasserstoffen) | |

6. Holzkonservierungsmittel mit bekämpfender Wirkung

| 1-[[2-(2,4-Dichlorphenyl)-4-propyl-1,3-dioxolan-2-yl] methyl]-1H-1,2,4-triazol (Propiconazol) | 2,0 Gew.-% |
|---|---|
| Cyano-(-4-fluoro-3-phenoxyphenyl-methyl-3-(2,2-dichloro-ethenyl)-2,2-dimethylcyclopropancarboxylat (Cyfluthrin) | 0,1 Gew.-% |
| Methoxypropylaceatat | 2,0 Gew.-% |
| Dibutylphthalat | 4,0 Gew.-% |
| Lösungsmittel | 91,9 Gew.-% |
| (Gemisch aus aromatischen und aliphatischen Kohlenwasserstoffen) | |

7. Konzentrat zum Konservieren von Holz und Holzwerkstoffen

| 1-[[2-(2,4-Dichlorphenyl)-4-propyl-1,3-dioxolan-2-yl] methyl]-1H-1,2,4-triazol (Propiconazol) | 3,0 Gew.-% |
|---|---|
| Cyano-(-4-fluoro-3-phenoxyphenyl-methyl-3-(2,2-dichloro-ethenyl)-2,2-dimethylcyclopropancarboxylat (Cyfluthrin) | 0,20 Gew.-% |
| Butyldiglykol | 2,0 Gew.-% |
| Alkydharz (100%ig) | 10,0 Gew.-% |
| Lösungsmittel | 84,80 Gew.-% |
| (Gemisch aus aromatischen und aliphatischen Kohlenwasserstoffen) | |

8. Konzentrat zum Konservieren von Holz und Kolzwerkstoffen

| 1-[[2-(2,4-Dichlorphenyl)-4-propyl-1,3-dioxolan-2-yl] methyl]-1H-1,2,4-triazol (Propiconazol) | 10,0 Gew.-% |
|---|---|
| Cyano-(-4-fluoro-3-phenoxyphenyl-methyl-3-(2,2-dichloro-ethenyl)-2,2-dimethylcyclopropancarboxylat (Cyfluthrin) | 0,5 Gew.-% |
| Butyldiglykol | 3,0 Gew.-% |
| Alkydharz (100%ig) | 15,0 Gew.-% |
| Lösungsmittel | 71,5 Gew.-% |
| (Gemisch aus aromatischen und aliphatischen Kohlenwasserstoffen) | |

9. Konzentrat zum Konservieren von Holz und Holzwerkstoffen, wasserverdünnbar

| | |
|---|---|
| 1-[[2-(2,4-Dichlorphenyl)-4-propyl-1,3-dioxolan-2-yl] methyl]-1H-1,2,4-triazol (Propiconazol) | 10,0 Gew.-% |
| Cyano-(-4-fluoro-3-phenoxyphenyl-methyl-3-(2,2-dichloro-ethenyl)-2,2-dimethylcyclopropancarboxylat (Cyfluthrin) | 0,5 Gew.-% |
| Alkydharz (100%ig) | 20,0 Gew.-% |
| Emulgator | 8,0 Gew.-% |
| Wasser | 61,5 Gew.-% |

10. Lasurartiges Holzkonservierungsmittel, wasserverdünnbar

| | |
|---|---|
| 1-[[2-(2,4-Dichlorphenyl)-4-propyl-1,3-dioxolan-2-yl] methyl]-1H-1,2,4-triazol (Propiconazol) | 1,5 Gew.-% |
| Cyano-(-4-fluoro-3-phenoxyphenyl-methyl-3-(2,2-dichloro-ethenyl)-2,2-dimethylcyclopropancarboxylat (Cyfluthrin) | 0,01 Gew.-% |
| Methyl-benzimidazol-2-yl-carbamat (Carbendazim) | 0,5 Gew.-% |
| Alkydharz (100%ig) | 18,0 Gew.-% |
| Emulgator | 2,0 Gew.-% |
| Pigmente Sikkative, Netzmittel | 2,5 Gew.-% |
| Antiabsetzmittel | 1,0 Gew.-% |
| Butyldiglykol | 3,0 Gew.-% |
| Wasser | 71,49 Gew.-% |

**Patentansprüche**

1. Mittel oder Konzentrat zum Konservieren von Holz und Holzwerkstoffen auf der Basis von oder unter Mitverwendung von 1-[[2-(2,4-Dichlorphenyl)-4-propyl-1,3-dioxolan-2-yl]methyl]-1H-1,2,4-triazol und mindestens eines Lösungsmittels, Verdünnungsmittels und/oder Zusatzmittels, dadurch gekennzeichnet, daß das Mittel oder Konzentrat
   0,05 bis 25 Gew.-%
   des 1-[[2-(2,4-Dichlorphenyl)-4-propyl-1,3-dioxolan-2-yl]methyl]-1-H-1,2,4-triazols,
   0,002 bis 5 Gew.-%
   Cyano-(4-fluoro-3-phenoxyphenyl)-methyl-3-(2,2-dichlorethenyl)-2,2-dimethylcyclopropancarboxylat, (±) α-Cyano-3-phenoxy-benzyl-(±)-cis, trans-3-(2,2-dichlorvinyl)-2,2-dimethylcyclopropancarboxylat, (S)-α-Cyano-3-phenoxybenzyl(1R,3R)-3(2,2-dibromvinyl)-2,2-dimethylcyclopropancarboxylat oder 3-Phenoxybenzyl-(±)-cis-trans-3-(2,2-dichlorvinyl)2,2-dimethylcyclopropancarboxylat oder enantiomere Verbindungen derselben als Insektizid (Pyrethroid) und
   mehr als 40 Gew.-%
   eines Gemisches aus Lösungs- und/oder Verdünnungsmittel und/oder organisch-chemisches Bindemittel und/oder Fixierungsmittel, Verarbeitungshilfsmittel, Farbstoff, Pigment, Farbstoff- oder Pigmentgemisch enthält.

2. Mittel oder Konzentrat nach Anspruch 1, dadurch gekennzeichnet, daß das Lösungs- und/oder Verdünnungsmittel ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und mindestens einen Emulgator und/oder Netzmittel enthält oder daraus besteht.

3. Mittel oder Konzentrat zum Konservieren von Holz und Holzwerkstoffen nach Ansprüchen 1 oder 2, dadurch gekennzeichnet, daß das Mittel (anwendungsfertige Mittel)
   0,2 bis 3 Gew.-%, vorzugsweise
   0,5 bis 2 Gew.-%
   des 1-[[2-(2,4-Dichlorphenyl)-4-propyl-1,3-dioxolan-2-yl]methyl]-1H-1,2,4-triazols,
   0,005 bis 1 Gew.-%, vorzugsweise
   0,01 bis 0,5 Gew.-%
   des Pyrethroids

und mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und Emulgator und/oder Netzmittel und ggf.

0 bis 5 Gew.-%, vorzugsweise

0,1 bis 3 Gew.-%

Fixierungsmittel und/oder andere Zusatzmittel als Restbestandteil enthält.

4. Mittel zum Konservieren von Holz und Holzwerkstoffen nach einem der Ansprüche 1 bis 3, dadurch gekennzeichnet, daß das Mittel (anwendungsfertige Mittel)

0,2 bis 3 Gew.-%, vorzugsweise

0,5 bis 2 Gew.-%

des 1-[[2-(2,4-Dichlorphenyl)-4-propyl-1,3-dioxolan-2-yl]methyl]-1H-1,2,4-triazols,

0,005 bis 1 Gew.-%, vorzugsweise

0,01 bis 0,5 Gew.-%

des Pyrethroids,

2 bis 30 Gew.-%, vorzugsweise

5 bis 22 Gew.-% berechnet als Feststoff,

eines Kunstharzbindemittels, vorzugsweise ein Alkydharz und/oder ein trocknendes pflanzliches Öl sowie mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und Emulgator und/oder Netzmittel sowie ggf. Sikkative, Farbstoffe, Farbpigmente, Antiabsetzmittel und/oder UV-Stabilisatoren als Restbestandteil enthält.

5. Konzentrat zum Konservieren von Holz und Holzwerkstoffen nach einem der Ansprüche 1 bis 3, dadurch gekennzeichnet, daß das Konzentrat

0,2 bis 25 Gew.-%, vorzugsweise

3 bis 8 Gew.-%,

des 1[[2-(2,4-Dichlorphenyl)-4-propyl-1,3-dioxolan-2-yl]methyl]-1H-1,2,4-triazols,

0,05 bis 5 Gew.-%, vorzugsweise

0,5 bis 1 Gew.-%

des Pyrethroids und

5 bis 40 Gew.-%, vorzugsweise

10 bis 30 Gew.-%,

(berechnet als Feststoff) mindestens eines organisch-chemischen Bindemittels und/oder Fixierungsmittels oder Weichmachers sowie zusätzlich ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder ein Penetrationshilfsmittel und/oder Wasser und einen Emulgator und/oder Netzmittel als Restbestandteil enthält.

6. Mittel oder Konzentrat zum Konservieren von Holz und Holzwerkstoffen nach einem oder mehreren der Ansprüche 1 bis 5, dadurch gekennzeichnet, daß das 1-[[2-(2,4-chlorphenyl)-4-propyl-1,3-dioxolan-2-yl]-methyl]-1H-1,2,4-triazol

von 0 bis 50 Gew.-%, vorzugsweise

von 0,5 bis 25 Gew.-%

(bezogen auf 100 Gew.-% eingesetztes 1-[[2-(2,4-Dichlorphenyl)-4-propyl-1,3-dioxolan-2-yl]methyl]-1H-1,2,4-triazol durch die gleiche Gewichtsmenge eines anderen Fungizids, vorzugsweise N-Dichlorfluormethylthio-N',N'-dimethyl-N-phenylschwefelsäurediamid und/oder N-(Dichlorfluormethylthio)N',N'-dimethyl-N-p-tolylsulfamid und/oder 1-[[2-(2,4-Dichlorphenyl)-1,3-dioxolan-2-yl)methyl]-1-H-1,2,4-triazol und/oder 1-(4-Chlor-)phenyl-3-hydroxy-3-tert.-butyl-4-(1,2,4-triazol-1-yl)-butan und/oder Tributylzinn-naphthenat und/oder Methyl-benzimidazol-2-yl-carbamat ersetzt ist.

7. Mittel oder Konzentrat zum Konservieren von Holz und Holzwerkstoffen nach einem oder mehreren der Ansprüche 1 bis 6, dadurch gekennzeichnet, daß das Mittel oder Konzentrat frei von aromatischen Oxyalkoholen ist.

8. Mittel oder Konzentrat zum Konservieren von Holz und Holzwerkstoffen nach einem oder mehreren der Ansprüche 1 bis 7, dadurch gekennzeichnet, daß ein Teil des organisch-chemischen Lösungsmittels oder Lösungsmittelgemisches durch ein aliphatisches polares organisch-chemisches Lösungsmittel oder Lösungsmittelgemisch, vorzugsweise ein Hydroxy- und/oder Ester- und/oder Äthergruppen enthaltendes aliphatisches organisch-chemisches Lösungsmittel oder Lösungsmittelgemisch ersetzt ist.

**Claims**

1. An agent or concentrate for preserving wood and timber materials on the basis of or with the joint use of 1-[[2-(2,4-dichlorophenyl)-4-propyl-1,3-dioxolan-2-yl]-methyl]-1H-1,2,4-triazole and at least one solvent, diluent and/or additive, characterised in that the agent or concentrate contains

   0.05 to 25% by weight

   of the 1-[[2-(2,4-dichlorophenyl)-4-propyl-1,3-dioxolan-2-yl]methyl]-1H-1,2,4-triasole,

   0.002 to 5% by weight

   cyano-(4-fluoro-3-phenoxyphenyl)-methyl-3-(2,2-dichloroethenyl)-2,2-dimethylcyclopropane carboxylate, (±)α-cyano-3-phenoxy-benzyl-(±)-cis, trans-3-(2,2-dichlorovinyl)-2,2-dimethylcyclopropane carboxylate, (S)-α-cyano-3-phenoxybensyl(1R,3R)-3(2,2-dibromovinyl)-2,2-dimethylcyclopropane carboxylate or 3-phenoxybenzyl-(±)-cis-trans-3-(2,2-dichlorovinyl)-2,2-dimethylcyclopropane carboxylate or enantiomeric compounds thereof as an insecticide (pyrethroid) and

   more than 40% by weight

   of a mixture of solvent and/or diluent and/or organic-chemical binder and/or fixing agent, processing aids, dye, pigment, dye or pigment mixture.

2. An agent or concentrate according to Claim 1, characterised in that the solvent and/or diluent contains or consists of an organic-chemical solvent or solvent mixture and/or an oily or oil-like, sparingly volatile organic-chemical solvent or solvent mixture and/or a polar organic-chemical solvent or solvent mixture and/or water and at least one emulsifier and/or wetting agent.

3. An agent or concentrate for preserving wood and timber materials according to Claims 1 or 2, characterised in that the agent (agent ready for use) contains

   0.2 to 3% by weight, preferably

   0.5 to 2% by weight,

   of the 1-[[2-(2,4-dichlorophenyl)-4-propyl-1,3-dioxolan-2-yl]methyl]-1H-1,2,4-triazole,

   0.005 to 1% by weight, preferably

   0.01 to 0.5% by weight,

   of the pyrethroid

   and at least one organic-chemical solvent or solvent mixture and/or an oily or oil-like, sparingly volatile organic-chemical solvent or solvent mixture and/or a polar organic-chemical solvent or solvent mixture and/or water and emulsifier and/or wetting agent, and optionally

   0 to 5% by weight, preferably

   0.1 to 3% by weight,

   fixing agent and/or other additive as the remaining constituent.

4. An agent for preserving wood and timber materials according to one of Claims 1 to 3, characterised in that the agent (agent ready for use) contains

   0.2 to 3% by weight, preferably

   0.5 to 2% by weight,

   of the 1-[[2-(2,4-dichlorophenyl)-4-propyl-1,3-dioxolan-2-yl]methyl]-1H-1,2,4-triazole,

   0.005 to 1% by weight, preferably

   0.01 to 0 5% by weight,

   of the pyrethroid

   2 to 30% by weight, preferably

   5 to 22% by weight, calculated as solid,

   of a synthetic resin binder, preferably an alkyd resin and/or a drying vegetable oil and also at least one organic-chemical solvent or solvent mixture and/or an oily or oil-like, sparingly volatile organic-chemical solvent or solvent mixture and/or a polar organic-chemical solvent or solvent mixture and/or water and emulsifier and/or wetting agent, and optionally siccatives, dyes, colour pigments, anti-settling agents and/or UV-stabilisers as the remaining constituent.

**5.** A concentrate for preserving wood and timber materials according to one of Claims 1 to 3, characterised in that the concentrate contains

0.2 to 25% by weight, preferably

3 to 8% by weight,

of the 1-[[2-(2,4-dichlorophenyl)-4-propyl-1,3-dioxolan-2-yl]methyl]-1H-1,2,4-triasole,

0.05 to 5% by weight, preferably

0.5 to 1% by weight,

of the pyrethroid and

5 to 40% by weight, preferably

10 to 30% by weight,

(calculated as solid) of at least one organic-chemical binder and/or fixing agent or softener and additionally an organic-chemical solvent or solvent mixture and/or an oily or oil-like, sparingly volatile organic-chemical solvent or solvent mixture and/or a polar organic-chemical solvent or solvent mixture and/or a penetration aid and/or water and an emulsifier and/or wetting agent as the remaining constituent.

**6.** An agent or concentrate for preserving wood and timber materials according to one or more of Claims 1 to 5, characterised in that

from 0 to 50% by weight, preferably

from 0.5 to 25% by weight,

(relative to 100% by weight 1-[[2-(2,4-dichlorophenyl)-4-propyl-1,3-dioxolan-2-yl]methyl]-1H-1,2,4-triazole used) of the 1-[[2-(2,4-dichlorophenyl)-4-propyl-1,3-dioxolan-2-yl]methyl]-1H-1,2,4-triasole is replaced by the same amount by weight of another fungicide, preferably N-dichlorofluoromethylthio-N',N'-dimethyl-N-phenyl sulphuric acid diamide and/or N-(dichlorofluoromethylthio)-N',N'-dimethyl-N-p-tolyl sulphamide and/or 1-[[2-(2,4-dichlorophenyl)-1,3-dioxolan-2-yl]methyl]-1H-1,2,4-triazole and/or 1-(4-chloro-)phenyl-3-hydroxy-3-tert.-butyl-4-(1,2,4-triazole-1-yl)-butane and/or tributyl tin naphthenate and/or methyl-benzimidazol-2-yl carbamate.

**7.** An agent or concentrate for preserving wood and timber materials according to one or more of Claims 1 to 6, characterised in that the agent or concentrate is free of aromatic oxyalcohols.

**8.** An agent or concentrate for preserving wood and timber materials according to one or more of Claims 1 to 7, characterised in that a portion of the organic-chemical solvent or solvent mixture is replaced by an aliphatic polar organic-chemical solvent or solvent mixture, preferably an aliphatic organic-chemical solvent or solvent mixture containing hydroxy groups and/or ester groups and/or ether groups.

**Revendications**

**1.** Agent ou concentré pour la conservation du bois et des objets en bois à base de ou avec utilisation simultanée de 1-[[2-(2,4-dichlorophényl)-4-propyl-1,3-dioxolan-2-yl]méthyl]-1H-1,2,4-triazole et d'au moins un solvant, diluant et/ou additif, caractérisé en ce que l'agent ou concentré contient

de 0,05 à 25% en poids

de 1-[[2-(2,4-dichlorophényl)-4-propyl-1,3-dioxolan-2-yl]méthyl]-1-H-1,2,4-triazole,

de 0,002 à 5% en poids

de cyano-(4-fluoro-3-phénoxyphényl)-méthyl-3-(2,2-dichloréthényl)-2,2-diméthylcyclopropanecarboxylate, (±)α-cyano-3-phénoxy-benzyl-(±)-cis,trans-3-(2,2-dichlorovinyl)-2,2-diméthylcyclopropanecarboxylate, (S)-α-cyano-3-phénoxybenzyl(1R,3R)-3(2,2-dibromovinyl)-2,2-diméthylcyclopropanecarboxylate ou 3-phénoxybenzyl-(±)-cis-trans-3-(2,2-dichlorovinyl)-2,2-diméthylcyclopropanecarboxylate ou de leurs composés énantiomères comme insecticide (pyréthroïde) et

plus de 40% en poids

d'un mélange de solvants et/ou diluants et/ou de liants organochimiques et/ou d'agents de fixation, d'adjuvants de traitement, de colorants, de pigments, de mélanges de colorants ou de pigments.

**2.** Agent ou concentré selon la revendication 1, caractérisé en ce que le solvant et/ou diluant contient ou se compose d'un solvant ou mélange de solvants organochimique et/ou d'un solvant ou mélange de solvants organochimique peu volatil huileux ou oléagineux et/ou d'un solvant ou mélange de solvants organochimique polaire et/ou d'eau et au moins d'un émulsifiant et/ou agent mouillant.

3. Agent ou concentré pour la conservation du bois et des objets en bois selon les revendications 1 ou 2, caractérisé en ce que l'agent (agent prêt à l'emploi) contient

de 0,2 à 3% en poids, de préférence

de 0,5 à 2% en poids

de 1-[[2-(2,4-dichlorophényl)-4-propyl-1,3-dioxolan-2-yl]méthyl]-1H-1,2,4-triazole,

de 0,005 à 1% en poids, de préférence

de 0,01 à 0,5% en poids

de pyréthroïde

et au moins un solvant ou mélange de solvants organochimique et/ou un solvant ou mélange de solvants organochimique peu volatil huileux ou oléagineux et/ou un solvant ou mélange de solvants organochimique polaire et/ou de l'eau et un émulsifiant et/ou un agent mouillant et le cas échéant

de 0 à 5% en poids, de préférence

de 0,1 à 3% en poids

d'un agent de fixation et/ou d'autres additifs comme composant résiduel.

4. Agent pour la conservation du bois et des objets en bois selon l'une des revendications 1 à 3, caractérisé en ce que l'agent (agent prêt à l'emploi) contient

de 0,2 à 3% en poids, de préférence

de 0,5 à 2% en poids

de 1-[[2-(2,4-dichlorophényl)-4-propyl-1,3-dioxolan-2-yl]méthyl]-1H-1,2,4-triazole,

de 0,005 à 1% en poids, de préférence

de 0,01 à 0,5% en poids

de pyréthroïde,

de 2 à 30% en poids, de préférence

de 5 à 22% en poids, calculé en produit solide,

d'un liant de résine synthétique, de préférence une résine alkyde et/ou une huile siccative végétale ainsi qu'au moins un solvant ou mélange de solvants organochimique et/ou un solvant ou mélange de solvants organochimique peu volatil huileux ou oléagineux et/ou un solvant ou mélange de solvants organochimique polaire et/ou de l'eau et un émulsifiant et/ou un agent mouillant ainsi que, le cas échéant, des siccatifs, des colorants, des pigments colorants, des agents anti-dépôt et/ou des stabilisateurs UV comme composants résiduels.

5. Concentré pour la conservation du bois et des objets en bois selon l'une des revendications 1 à 3, caractérisé en ce que le concentré contient

de 0,2 à 25% en poids, de préférence

de 3 à 8% en poids

de 1-[[2-(2,4-dichlorophényl)-4-propyl-1,3-dioxolan-2-yl]méthyl]-1H-1,2,4-triazole,

de 0,05 à 5% en poids, de préférence

de 0,5 à 1% en poids

de pyréthroïde et

de 5 à 40% en poids, de préférence

de 10 à 30% en poids,

(calculé en produit solide) d'au moins un liant organochimique et/ou agent de fixation ou plastifiant ainsi qu'en outre un solvant ou mélange de solvants organochimique et/ou un solvant ou mélange de solvants organochimique peu volatil huileux ou oléagineux et/ou un solvant ou mélange de solvants organochimique polaire et/ou un adjuvant de pénétration et/ou de l'eau et un émulsifiant et/ou un agent mouillant comme composant résiduel.

6. Agent ou concentré pour la conservation du bois et des objets en bois selon une ou plusieurs des revendications 1 à 5, caractérisé en ce que le 1-[[2-(2,4-dichlorophényl)-4- propyl-1,3-dioxolan-2-yl]-méthyl] 1H-1,2,4-triazole

de 0 à 50% en poids, de préférence

de 0,5 à 25% en poids

(par rapport à 100% en poids de 1-[[2-(2,4-dichloro-phényl)-4-propyl-1,3-dioxolan-2-yl]méthyl]-1H-1,2,4-triazole utilisé) est remplacé par la même quantité pondérale d'un autre fongicide, de préférence de diamide de l'acide N-dichlorofluorométhylthio-N',N'-diméthyl-N-phénylsulfurique et/ou de N-(dichlorofluorométhylthio)-N',N'-diméthyl-N-p-tolylsulfamideet/ou de 1-[[2-(2,4-dichlorophényl)-1,3-dioxolan-2-yl]-méthyl]-1-H-1,2,4-triazole et/ou de 1-(4-chloro) - phényl-3-hydroxy-3-tert.-butyl-4-(1,2,4-triazol-1-yl)-butane et/ou de naphténate de tributylétain et/ou de benzimidazol-2-yl-carbamate de méthyle.

7. Agent ou concentré pour la conservation du bois et des objets en bois selon une ou plusieurs des revendications 1 à 6, caractérisé en ce que l'agent ou concentré est dépourvu d'oxyalcools aromatiques.

8. Agent ou concentré pour la conservation du bois et des objets en bois selon une ou plusieurs des revendications 1 à 7, caractérisé en ce qu'une partie du solvant ou mélange de solvants organochimique est remplacée par un solvant ou mélange de solvants organochimique polaire aliphatique, de préférence un solvant ou mélange de solvants organochimique aliphatique contenant un groupe hydroxy et/ou ester et/ou éther.